(19) Europäisches Patentamt
European Patent Office
Office européen des brevets

(11) **EP 2 223 065 B1**

(12) **FASCICULE DE BREVET EUROPEEN**

(45) Date de publication et mention
de la délivrance du brevet:
**31.10.2012 Bulletin 2012/44**

(21) Numéro de dépôt: **08867123.5**

(22) Date de dépôt: **24.12.2008**

(51) Int Cl.:
*G01K 17/00* (2006.01)     *G01K 19/00* (2006.01)

(86) Numéro de dépôt international:
**PCT/EP2008/068287**

(87) Numéro de publication internationale:
**WO 2009/083569 (09.07.2009 Gazette 2009/28)**

(54) **PROCEDE DE MESURE DE PUISSANCE D'UN CORPS EMETTEUR DE CHALEUR**

VERFAHREN ZUR MESSUNG DER LEISTUNG EINES WÄRMEABGEBENDEN KÖRPERS

METHOD OF MEASURING THE POWER OF A HEAT-EMITTING BODY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.12.2007 FR 0760434**

(43) Date de publication de la demande:
**01.09.2010 Bulletin 2010/35**

(73) Titulaire: **Commissariat à l'Énergie Atomique et aux Énergies Alternatives 75015 Paris (FR)**

(72) Inventeurs:
• **YALA, Philippe**
  **F-91470 Limours (FR)**
• **LETERME, Dominique**
  **F-91190 Gif Sur Yvette (FR)**

(74) Mandataire: **Ilgart, Jean-Christophe et al BREVALEX 95 rue d'Amsterdam 75378 Paris Cedex 8 (FR)**

(56) Documents cités:
**FR-A- 2 516 237**

• **STÉPHANE BOURGANEL: "Conception d'une expérience de mesure de la puissance résiduelle d'un combustible irradié: l'expérience MERCI" [Online] 2003, CEA , XP002490998 Extrait de l'Internet: URL:http://www-ist.cea.fr/ publicea/exl-doc /00000037682.pdf> [extrait le 2008-08-04] abrégé pages 55-56 pages 104,112 page 115 pages 143-148**
• **ANONYMOUS: "Rapport: Thèse - Bourganel" INTERNET ARTICLE, [Online] XP002490996 Extrait de l'Internet: URL:http://www-ist.cea.fr/ publicea/exl-php /cadcgp.php> [extrait le 2008-08-04]**
• **STÉPHANE BOURGANEL: "Conception d'une expérience de mesure de la puissance résiduelle d'un combustible irradié: l'expérience MERCI" RAPPORT CEA-R-6033, [Online] XP002490997 Saclay ISSN: 0429-3460 Extrait de l'Internet: URL: http://www-ist.cea.fr/publicea/exl-doc /00000037682_2.pdf> [extrait le 2008-08-04]**

EP 2 223 065 B1

**Description**

L'invention a trait à un procédé de mesure de puissance d'un corps émetteur de chaleur, qui peut notamment convenir à la mesure de la puissance résiduelle d'un crayon de combustible nucléaire.

Une application principalement envisagée pour l'invention est le domaine nucléaire et en particulier le retraitement et le stockage des combustibles usés. Après l'arrêt de la réaction en chaîne dans un réacteur nucléaire, le combustible irradié continue à dégager de la puissance radioactive appelée puissance résiduelle et qu'il faut estimer afin de définir les conditions de stockage, de transport ou de retraitement du combustible.

Le rayonnement résiduel peut être estimé par spectroscopie ou par calorimétrie en mesurant l'échauffement d'un écran frappé par le rayonnement et qui l'absorbe. Les mesures peuvent être de durées très variables, entre quelques minutes et quelques jours, ou même quelques mois.

Les dispositifs et procédés connus manifestent une certaine imprécision, de l'ordre d'au moins 3% du résultat, et qu'on peut attribuer aux pertes thermiques des calorimètres et à l'instabilité de la référence de température pendant une longue durée. L'objet de l'invention est d'améliorer la précision de la mesure pour la rendre égale à environ 1% de la puissance résiduelle (dans des conditions de mesure comparables), pour des périodes de temps de mesure comprises par exemple entre 20 minutes et deux mois à partir de l'arrêt de l'irradiation et pour une évolution d'une puissance comprise entre 300 W et 3 W. Cela est obtenu par une meilleure maîtrise du bilan thermique.

Sous sa forme la plus générale, l'invention est relative à un procédé de mesure de puissance d'un corps émetteur de chaleur, comprenant les étapes suivantes:

- enfermer le corps émetteur dans une enceinte comprenant un vase absorbant le rayonnement, une enveloppe isolante thermique entourant le vase de façon adjacente, le corps étant placé dans un creux du vase, et des moyens de mesure de température placés à une jonction du vase et de l'enveloppe,
- mesurer la température des moyens de mesure,
- déduire la puissance de la température mesurée,

la puissance étant déduite par une formule comprenant un premier terme proportionnel à la température et un deuxième terme proportionnel à une variation temporelle de la température, la formule comprenant un coefficient B de proportionnalité du premier terme et un coefficient A de proportionnalité du deuxième terme, les coefficients étant calculés au cours d'un étalonnage, le coefficient B pendant des périodes où l'enceinte est soumise à un palier à puissance constante et connue émise du creux du vase, procédé caractérisé en ce que le coefficient A est calculé pendant des périodes de refroidissement consécutives à des interruptions brusques du palier de puissance, par $A = -B.\theta \, / \, \dfrac{d\theta}{dt}$, où $\theta$ est une température mesurée pendant le palier de puissance.

Cette définition de l'invention est délimitée de l'art antérieur le plus proche, à savoir la thèse de Bourganel intitulée « Conception d'une expérience de mesure de la puissance résiduelle d'un combustible irradié : l'expérience MERCI ».

Le reste de l'art antérieur (par exemple FR-A-2 516 237) indique certes que la puissance rayonnée dépend à la fois de la température et d'une variation de la température, mais sans indiquer de façon concrète d'exploiter les deux termes. Les formules données dans ces documents sont exprimés en fonction des propriétés des différents éléments du système (masse, conductivité, etc.) qu'il est impossible de mesurer toutes avec une précision excellente, ce qui conduit à l'incertitude relativement élevée indiquée plus haut ; le procédé de FR-A-2 516 237 néglige d'ailleurs le terme proportionnel à la variation de température en préconisant d'attendre la stabilisation pour effectuer la mesure. Aucune façon d'élaborer le coefficient de ce terme n'est d'ailleurs donnée.

En corrélant la puissance émise par le combustible et dissipée en chaleur essentiellement dans le vase, puis retirée par le réfrigérant maintenu à une température constante, à l'échauffement du vase on obtient seulement une précision moyenne, représentative de l'art connu; mais l'addition du terme exprimant la variation temporelle de la température est de nature à apporter la meilleure précision qu'on souhaite dans le résultat estimé.

D'autres aspects de l'invention seront maintenant décrits au moyen des figures, parmi lesquelles:

- la figure 1 est une vue générale de l'appareil de mesure,
- la figure 2 illustre le vase enclosant le corps émetteur,
- et la figure 3 illustre un dispositif d'étalonnage.

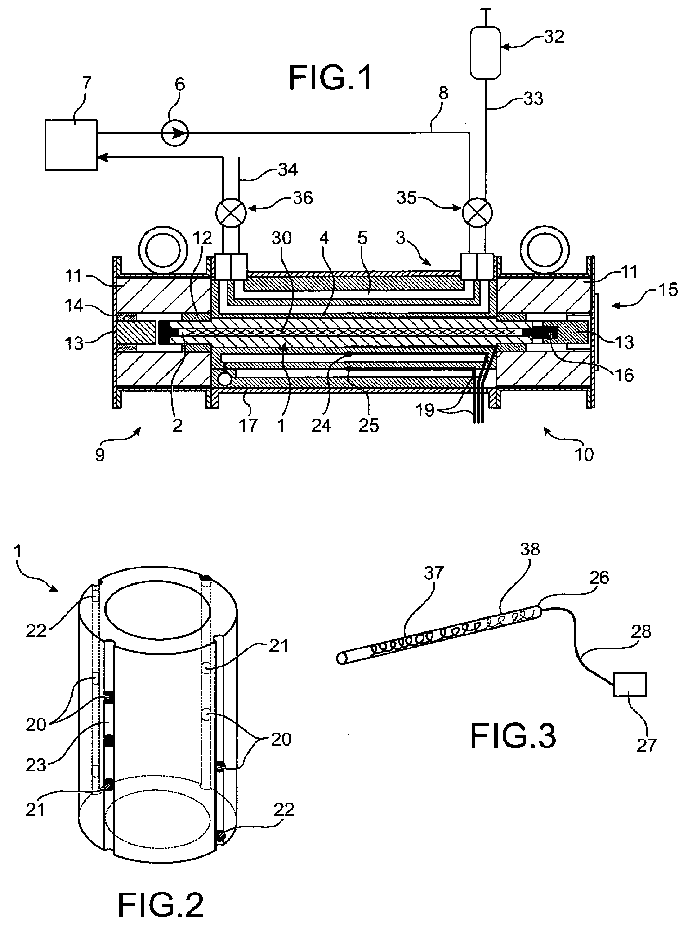

Le dispositif par lequel le procédé est mis en oeuvre, représenté à la figure 1, est un fluxmètre dont un premier élément est un vase 1 conducteur de chaleur, en tungstène dans cette réalisation (mais le cuivre et l'aluminium pourraient convenir aussi), muni d'un creux 2 dans lequel le corps émetteur du rayonnement (un crayon 30 de combustible nucléaire) est placé. Il est avantageux pour améliorer la précision de la mesure que le creux 2 soit ajusté aux dimensions extérieures du corps émetteur avec un faible jeu. Dans le cas de mesures sur des crayons de combustible nucléaire qu'on développe ici, le vase 1 est un tube allongé clos aux extrémités.

La conductivité du vase 1 est suffisamment forte, par rapport à ses dimensions pour qu'on puisse supposer que la température y est uniforme. Cette caractéristique est obtenue en respectant un nombre de Biot inférieur à 0,1. Il faut toutefois aussi que la puissance émise par le crayon 30 s'y dissipe presque complètement, ce qui impose aussi une épaisseur minimale pour absorber le rayonnement gamma, le plus pénétrant.

Le vase 1 est entouré par une enveloppe isolante 3 à la chaleur, en fibres de silice dans cette réalisation, également tubulaire, et séparée de lui par un jeu très faible ou nul. L'enveloppe isolante 3 comprend deux chambres 4 et 5 séparées, annulaires et concentriques de circulation d'eau de réfrigération. Les chambres 4 et 5 sont reliées à un circuit de réfrigération unitaire extérieur au fluxmètre et qui se divise seulement en arrivant aux chambres 4 et 5. Il comprend des dispositifs usuels pour maintenir les conditions d'écoulement et l'uniformité de température et, notamment, une pompe 6 et une source froide 7 sur une canalisation 8. Le liquide de refroidissement passe par l'une ou l'autre des chambres 4 et 5 d'après la puissance émise et le gradient de température à établir pour une évacuation suffisante de chaleur : la chambre intérieure 4 est mise en service pour la réfrigération aux fortes puissances émises, la chambre extérieure 5 aux faibles puissances. Le circuit comprend alors une bouteille d'air ou d'azote comprimé 32 et des canalisations d'entrée et de sortie de gaz 33 et 34 dans les chambres 4 et 5 et hors d'elles. Des vannes 35 et 36 sont conçues pour brancher l'une des chambres 4 et 5 au choix à la canalisation 8 d'eau du circuit, l'autre aux canalisations d'entrée et de sortie de gaz 33 et 34, et pour procéder aux commutations. L'utilisation des deux chambres 4 et 5 détermine ainsi deux plages de mesure différentes, améliorant là encore la précision de l'ensemble.

Le fluxmètre comprend encore deux bouchons 9 et 10 d'extrémité dont chacun comprend un tube 11 épais en verre cellulaire s'appuyant sur l'enveloppe isolante 3 et séparé du vase 1 par un tube de centrage 12. L'enveloppe isolante 3 est plus courte que le vase 1, de sorte que les extrémités du crayon ne sont pas placées devant elle, mais cela n'introduit pas d'irrégularité puisque le combustible n'est pas présent à ces extrémités. Les bouchons 9 et 10 comprennent encore un bloc 13, aussi en verre cellulaire, venant en face des bouts du vase 1 et séparé du tube 11 par un autre tube de centrage 14. Le verre cellulaire est choisi pour ses propriétés d'isolation thermique qui réduisent les fuites et pour sa bonne résistance mécanique qui fait des bouchons 9 et 10 de bons supports du fluxmètre. Un des bouchons 10 est affecté au passage du crayon 30 de combustible dans le creux 2 du vase 1 : une partie de ce bouchon 10, comprenant notamment le bloc 13, est amovible en retirant un couvercle 15. Une tape 16 fermant l'extrémité en regard du vase 1 et unie au bloc 13 est alors retirée elle aussi, ce qui ouvre le creux 2.

L'ensemble du fluxmètre est entouré par une enceinte extérieure 17.

On passe à la figure 2. Les thermocouples par lesquels les températures sont mesurées, et qui sont reliés à une installation extérieure non représentée, sont ici au nombre de seize et répartis dans le fluxmètre, mais un seul pourrait éventuellement suffire. Huit d'entre eux sont implantés à l'extérieur du vase 1 et plus précisément dans des rainures 23 axiales à sa périphérie : quatre (référencés par 20) à mi-longueur du vase 1 et à 90° l'un de l'autre, deux autres (référencés par 21) décalés de 10 millimètres dans deux des rainures 23 et diamétralement opposés, et les deux derniers (référencés par 22) à des extrémités respectives du vase 1, à 90° des précédents et dans les autres rainures 23. Chacune des quatre rainures 23 contient donc deux thermocouples 20 et leurs deux fils 19.

Quatre autres thermocouples 24 sont insérés dans la surface externe de la chambre 4 située à l'intérieur, dans le plan médian du dispositif et à 90° l'un de l'autre, devant les thermocouples 20. Les quatre derniers thermocouples 25 sont insérés à la surface interne de la chambre 5 située à l'extérieur, encore devant les thermocouples 20. L'enveloppe isolante 3 est aussi munie de rainures axiales analogues aux rainures 23 pour le passage des fils de ces thermocouples supplémentaires. Les thermocouples 20, 21 et 22 donnent la température du vase 1 et sont essentiels à la mesure, alors que les thermocouples 24 et 25 surveillent l'uniformité de température du liquide réfrigérant et permettent de vérifier si le réfrigérant est une source froide efficace, en s'assurant que la face extérieure de l'enveloppe isolante 3 est bien à sa température.

Le dispositif comprend encore des sondes à résistance de platine non représentées, à l'entrée, à la sortie et à mi-longueur des chambres 4 et 5, à la surface externe de la chambre interne et à la surface interne de la chambre externe. Ces sondes servent à mesurer la température de l'eau afin d'appliquer un asservissement à la source froide 7.

Ce dispositif permet d'exprimer la puissance du crayon 30 de combustible nucléaire contenu dans le creux 2 par la formule $W(t) = A\, d\theta/dt + B\,\theta$, où W désigne la puissance rayonnée par le crayon 30, $\theta$ la température du vase 1 mesurée par les thermocouples 20, 21 et 22, et A et B sont des coefficients exprimant la capacité calorifique globale du dispositif et la fuite thermique du dispositif.

Les coefficients A et B sont déterminés de façon purement expérimentale par un étalonnage préliminaire, comprenant des paliers successifs à puissance constante alternant avec des variations de puissance, consistant avantageusement en un arrêt brusque impliquant un refroidissement. La chute de la température en fonction du temps est alors inversement exponentielle, de sorte que la pente du signal à l'origine donne la valeur de A par la formule appliquée

$$W \quad = \quad 0 \quad = \quad A \quad \frac{dA}{dt} + B\theta, \text{ soit}$$

$$A = -B\theta / \frac{d\theta}{dt} \cdot \text{ La valeur du } dt \ dt \text{ coefficient B}$$

a été calculée au palier précédent par $W = 0 + B\theta$ soit

$$B = \frac{W}{\theta} .$$ Les coefficients A et B variant normalement avec la température, ces étalonnages doivent être répétés à des températures dans toute la plage de mesure.

L'étalonnage s'effectue avec un crayon chauffant 26 représenté à la figure 3 et qui peut être placé dans le creux à la place du crayon 30 de combustible, dont il a les mêmes dimensions. Il est relié à une source de chauffage variable 27 par un fil 28. L'échauffement y est produit par un bobinage comprenant une partie plus résistante 37 au centre, ce qui correspond au lieu de présence du combustible dans le crayon 30, et une partie 38 plus conductrice en cuivre à l'extrémité menant au fil 28, où la dissipation de chaleur est beaucoup plus réduite : une répartition d'émission de chaleur analogue à celle du crayon 30 est ainsi réalisée le long du crayon chauffant 26. Les conditions d'étalonnage sont proches de celles qui seront présentées par la suite. Les paliers de puissance peuvent être compris entre quelques centaines de watts et quelques watts, la température de l'eau de réfrigération est maintenue constante à une valeur qui sera la même que pour les mesures ultérieures. La température environnante autour du fluxmètre sera aussi si possible maintenue constante.

## Revendications

1. Procédé de mesure de puissance d'un corps (30) émetteur de chaleur, comprenant les étapes suivantes :

    - enfermer le corps émetteur dans une enceinte comprenant un vase (1) absorbant la chaleur, une enveloppe isolante thermique (3) entourant le vase de façon adjacente, le corps (30) étant placé dans un creux (2) du vase, et des moyens de mesure de température (20, 21, 22) placés à une jonction du vase (1) et de l'enveloppe (3),
    - mesurer la température des moyens de mesure,
    - déduire la puissance de la température mesurée,

    la puissance étant déduite par une formule comprenant un premier terme proportionnel à la température et un deuxième terme proportionnel à une variation temporelle de la température, la formule comprenant un coefficient B de proportionnalité du premier terme et un coefficient A de proportionnalité du deuxième terme, les coefficients étant calculés au cours d'un étalonnage, le coefficient B pendant des périodes où l'enceinte est soumise à un palier à puissance constante et connue émise du creux du vase (21), procédé **caractérisé en ce que** le coefficient A est calculé pendant des périodes de refroidissement consécutives à des interruptions brusques du palier de puissance, par $A = -B.\theta \, / \, \dfrac{d\theta}{dt}$ , où

θ est une température mesurée pendant le palier de puissance.

2. Procédé de mesure de puissance d'un corps émetteur de chaleur selon la revendication 1, **caractérisé en ce qu'**il comprend une étape préliminaire d'étalonnage où un corps d'étalonnage (26) est placé dans le creux du vase à la place du corps émetteur de chaleur, le corps d'étalonnage est mis en service de façon à émettre une puissance connue et variable selon une succession comprenant des paliers à puissance fixe séparés par des variations de puissance, des coefficients de pondération du terme proportionnel à la température et du terme proportionnel à la variation temporelle de la température étant obtenus.

3. Procédé de mesure de puissance d'un corps émetteur de chaleur selon l'une quelconque des revendications 1 ou 2, **caractérisé en ce que** le vase (1) possède un nombre de Biot inférieur à 0,1.

4. Procédé de mesure de puissance d'un corps émetteur de chaleur selon l'une quelconque des revendications 1 à 3, **caractérisé en ce que** le vase est en tungstène.

5. Procédé de mesure de puissance d'un corps émetteur de chaleur selon l'une quelconque des revendications 1 à 3, **caractérisé en ce que** le vase est en cuivre.

6. Procédé de mesure de puissance d'un corps émetteur de chaleur selon l'une quelconque des revendications 1 à 3, **caractérisé en ce que** le vase est en aluminium.

7. Procédé de mesure de puissance d'un corps émetteur de chaleur selon l'une quelconque des revendications 1 à 6, **caractérisé en ce que** l'enveloppe (13) est maintenue à température constante par un circuit de circulation de liquide (4, 5, 8) la parcourant.

8. Procédé de mesure de puissance d'un corps émetteur de chaleur selon la revendication 7, **caractérisé en ce que** le circuit comprend deux chambres (4, 5) séparées et concentriques parcourant l'enveloppe, et le procédé comprend un choix d'une des chambres pour faire passer le liquide.

9. Procédé de mesure de puissance d'un corps émetteur de chaleur selon l'une quelconque des revendications 1 à 8, **caractérisé en ce que** le corps est un crayon de combustible nucléaire, et le vase et l'enveloppe sont tubulaires.

10. Procédé de mesure de puissance d'un corps émetteur de chaleur selon l'une quelconque des revendications 1 à 9, **caractérisé en ce que** le corps d'étalonnage comprend un élément chauffant.

11. Procédé de mesure de puissance d'un corps émetteur de chaleur selon les revendications 9 et 10, **caractérisé en ce que** le corps d'étalonnage est un tube (26) contenant un bobinage qui est l'élément chauffant et qui comprend une partie moins conductrice (37) de l'électricité au centre du tube (26) et une partie plus conductrice (38) à une extrémité, reliant à une source d'électricité (27) extérieure.

**Claims**

1. A method for measuring power from a heat emitting body (30), comprising the following steps:

   - confining the emitting body in an enclosure comprising a heat absorbing vessel (1), a thermal insulating cover (3) surrounding the vessel adjacently, the body (30) being placed in a recess (2) of the vessel, and means for measuring temperature (20, 21, 22) which are placed at a junction of the vessel (1) and of the cover (3),
   - measuring the temperature of the measurement means,
   - inferring the power from the measured temperature,

   wherein the power is inferred by a formula comprising a first term proportional to temperature and a second term proportional to a time variation of the temperature, the formula comprising a proportionality coefficient B of the first term and a proportionality coefficient A of the second term, the coefficients being calculated during calibration, the coefficient B during periods when the enclosure is subject to a plateau of known constant power emitted from the recess of the vessel (21), the method being **characterized in that** the coefficient A is calculated during cooling periods consecutive to sudden interruptions of the power plateau, by $A = -B \cdot \theta / \dfrac{d\theta}{dt}$ ,

   wherein $\theta$ is a temperature measured during the power plateau.

2. The method for measuring power of a heat-emitting body according to claim 1, **characterized in that** it comprises a preliminary calibration step in which a calibration body (26) is placed in the recess of the vessel in the place of the heat-emitting body, the calibration body is set into operation so as to emit a known and variable power according to a succession comprising set power plateaus separated by power variations, with weighting coefficients of the term proportional to temperature and of the term proportional to the time variation of the temperature being obtained.

3. The method for measuring power of a heat-emitting body according to any of claims 1 or 2, **characterized in that** the vessel (1) has a Biot number of less than 0.1.

4. The method for measuring power of a heat-emitting body according to any of claims 1 to 3, **characterized in that** the vessel is in tungsten.

5. The method for measuring power of a heat-emitting body according to any of claims 1 to 3, **characterized in that** the vessel is in copper.

6. The method for measuring power of a heat-emitting body according to any of claims 1 to 3, **characterized in that** the vessel is in aluminium.

7. The method for measuring power of a heat-emitting body according to any of claims 1 to 6, **characterized in that** the cover (13) is maintained at constant temperature by a circuit (4, 5, 8) for circulating a liquid through it.

8. The method for measuring power of a heat-emitting body according to claim 7, **characterized in that** the circuit comprises two separate and concentric chambers (4, 5) extending through the cover, and the method comprises a selection of one of the chambers for letting through the liquid.

9. The method for measuring power of a heat-emitting body according to any of claims 1 to 8, **characterized in that** the body is a nuclear fuel rod, and the vessel and the cover are tubular.

10. The method for measuring power of a heat-emitting body according to any of claims 1 to 9, **characterized in that** the calibration body comprises a heating element.

11. The method for measuring power of a heat-emitting body according to claims 9 and 10, **characterized in that** the calibration body is a tube (26), containing a coil which is the heating element and which comprises a less electrically conducting portion (37) at the centre of the tube (26) and a more conducting portion (38) at one end, connecting to an outer electricity source (27).

**Patentansprüche**

1.  Verfahren zur Messung der Leistung eines Wärme emittierenden Körpers (30), das Verfahren umfassend die folgenden Verfahrensstufen bzw. -schritte:

    - Einschließen des Körpers in eine Umschließung, welche ein die Wärme absorbierendes Gefäß (1) und eine eng anliegend umgebende wärmeisolierende Umhüllung (3) umfasst, wobei der Körper (30) in einem Hohlraum (2) des Gefäßes angeordnet ist und Mittel (20, 21, 22) zur Temperaturmessung in einer Verbindung des Gefäßes (1) und der Umhüllung (3) angeordnet sind,
    - Messen der Temperatur der Messmittel,
    - Ableiten der Leistung aus der gemessenen Temperatur,
    - wobei die Herleitung der Leistung mittels einer Formel erfolgt, welche einen der Temperatur proportionalen ersten Term und einen der zeitlichen Änderung der Temperatur proportionalen zweiten Term enthält und die Formel einen Proportionalitätskoeffizienten B des ersten Terms sowie einen Proportio-nalitätskoeffizienten A des zweiten Terms umfasst und die Koeffizienten im Verlauf einer Eichung berechnet werden, und zwar der Koeffizient B während Perioden, in denen die Umschließung einer Stufe bzw. einem Plafond konstanter und bekannter Leistungsemission bzw. -abgabe des Hohlraums des Gefäßes (21) ausgesetzt ist, das Verfahren **dadurch gekennzeichnet, dass** der Koeffizient A während aufeinander folgender Kühlperioden, die jeweils auf brüske Unterbrechungen der Leistungsstufen bzw. plafonds folgen, berechnet wird, gemäß der Beziehung

    $$A = - B.\theta / \frac{d\theta}{dt}$$, worin $\theta$ die während der Leistungsstufe bzw. des Leistungsplafonds gemessene Temperatur bedeutet.

2.  Verfahren zum Messen der Leistung eines Wärme emittierenden Körpers nach Anspruch 1, **dadurch gekennzeichnet, dass** das Verfahren eine vorläufige bzw. vorausgehende Eichstufe umfasst, in welcher ein Eichkörper (26) anstelle des wärmeemittierenden Körpers in dem Hohlraum des Gefäßes angeordnet wird, dass der Eichkörper in Betrieb gesetzt wird zur Erzeugung einer bekannten und gemäß einer Abfolge veränderliche Leistung, welche durch Leistungsänderungen getrennte feste Leistungsstufen bzw.-plafonds umfasst, wodurch Koeffizienten zur Gewichtung des der Temperatur proportionalen Terms und des zur zeitlichen Änderung der Temperatur proportionalen Terms erhalten werden.

3.  Verfahren zum Messen der Leistung eines Wärme emittierenden Körpers nach einem beliebigen der Ansprüche 1 oder 2, **dadurch gekennzeichnet, dass** das Gefäß (1) eine BIOT-Zahl kleiner als 0,1 besitzt.

4.  Verfahren zum Messen der Leistung eines Wärme emittierenden Körpers nach einem beliebigen der Ansprüche 1 bis 3, **dadurch gekennzeichnet, dass** das Gefäß aus Wolfram besteht.

5.  Verfahren zum Messen der Leistung eines Wärme emittierenden Körpers nach einem beliebigen der Ansprüche 1 bis 3, **dadurch gekennzeichnet, dass** das Gefäß aus Kupfer besteht.

6.  Verfahren zum Messen der Leistung eines Wärme emittierenden Körpers nach einem beliebigen der Ansprüche 1 bis 3, **dadurch gekennzeichnet, dass** das Gefäß aus Aluminium besteht.

7.  Verfahren zum Messen der Leistung eines Wärme emittierenden Körpers nach einem beliebigen der Ansprüche 1 bis 6, **dadurch gekennzeichnet, dass** die Umhüllung (13) mittels einer von einer Zirkulationsflüssigkeit durchströmten Zirkulationsleitung (4, 5, 6) auf einer konstanten Temperatur gehalten wird.

8.  Verfahren zum Messen der Leistung eines Wärme emittierenden Körpers nach Anspruch 7, **dadurch gekennzeichnet, dass** die Zirkulationsleitung zwei die Umhüllung durchströmende, gesonderte und konzentrische Kammern (4, 5) umfasst, und dass das Verfahren eine Auswahl einer der Kammern für den Durchfluß der Flüssigkeit umfasst.

9.  Verfahren zum Messen der Leistung eines Wärme emittierenden Körpers nach einem beliebigen der Ansprüche 1 bis 8, **dadurch gekennzeichnet, dass** der Körper ein Kernbrennstoff-Stab ist und daß das Gefäß und die Umhüllung rohrförmig sind.

10. Verfahren zum Messen der Leistung eines Wärme emittierenden Körpers nach einem beliebigen der Ansprüche 1 bis 9, **dadurch gekennzeichnet, dass** der Eichkörper ein Heizelement umfasst.

11. Verfahren zum Messen der Leistung eines Wärme emittierenden Körpers nach den Ansprüche 9 und 10, **dadurch gekennzeichnet, dass** der Eichkörper ein Rohr (26) mit einer das Heizelement bildenden Wicklung ist, welche einen elektrisch weniger leitenden Teil (37) in der Mitte des Rohrs (26) aufweist sowie einen elektrisch stärker leitenden Teil (38) an einem mit einer äußeren Stromquelle (27) verbundenen Ende.

# FIG.1

# FIG.2

# FIG.3

**EP 2 223 065 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2516237 A